# EUROPÄISCHE PATENTANMELDUNG

(11) **EP 2 031 731 A1**
(43) Veröffentlichungstag der Anmeldung: **04.03.2009**
(21) Anmeldenummer: 08163302.6
(22) Anmeldetag: 29.08.2008
(51) Int. Cl.: H02J 7/02

(54) **Vorrichtung und Verfahren zur drahtlosen Energie- und/oder Datenübertragung zwischen einem Quellgerät und mindestens einem Zielgerät**

(30) Priorität: 01.09.2007 DE 102007041686; 18.12.2007 DE 102007060811
(71) Anmelder: MAQUET GmbH & Co. KG, 76437 Rastatt (DE)
(72) Erfinder: Brühn, Alfred, 76187 Karlsruhe (DE)
(74) Vertreter: Schaumburg, Thoenes, Thurn, Landskron

(57) **Zusammenfassung**

Die Erfindung betrifft eine Vorrichtung und ein Verfahren zur drahtlosen Energie- und/oder Datenübertragung zwischen einem Quellgerät und mindestens einem Zielgerät, bei denen durch mindestens eine quellgeräteseitige Primärspule (18) mindestens eines Primärstromkreises in mindestens einer zielgeräteseitigen Sekundärspule (20) mindestens eines Sekundärstromkreises, und in mindestens einer Spule mindestens eines Resonanzkreises eine Spannung induziert wird, wobei der Resonanzkreis vom Primärstromkreis und vom Sekundärstromkreis elektrisch isoliert angeordnet ist.

## Beschreibung

Die Erfindung betrifft eine Vorrichtung und ein Verfahren zur drahtlosen Energie- und/oder Datenübertragung zwischen einem Quellgerät und mindestens einem Zielgerät, bei denen mindestens ein Primärstromkreis mit mindestens einer quellgeräteseitigen Primärspule und mindestens ein Sekundärstromkreis mit mindestens einer zielgeräteseitigen Sekundärspule vorgesehen sind. Insbesondere bezieht sich die Erfindung auf eine induktive Energieübertragung zwischen Geräten oder Gerätekomponenten zum Aufladen von mindestens einem in einem Gerät bzw. in einer Gerätekomponente angeordneten Akkumulator, wie beispielsweise zum Aufladen eines Akkumulators in einer Fernbedienung.

Für medizinische Geräte, insbesondere für Operationstische, werden Fernbedienungen als drahtlose Bediengeräte angeboten, mit deren Hilfe das jeweilige Gerät aus verschiedenen Positionen und aus einiger Entfernung zu einer Empfängereinheit des Gerätes zum Empfangen der Signale der Fernbedienung bedient werden können. Solche Fernbedienungen ermöglichen eine bequeme Nutzung zumindest eines Teils der Bedienfunktionen des medizinischen Gerätes bzw. des Operationstisches. Solche Bediengeräte werden im Stand der Technik mit Batterien oder Akkumulatoren betrieben. Zur Sicherung der Einsatzfähigkeit einer solchen Fernbedienung empfiehlt sich der Einsatz von wiederaufladbaren Akkumulatoren, wodurch die Fernbedienung nach dem Aufladen oder Nachladen der Akkumulatoren zuverlässig während der gesamten nachfolgenden Behandlung als Bedieneinheit eingesetzt werden kann.

Ferner ermöglicht der Einsatz spezieller Akkumulatoren bei relativ kleiner an die konstruktiven Gegebenheiten der Fernbedienung angepasster Baugröße, eine große Energiemenge für den Betrieb der Fernbedienung bereitzustellen. Zur Ladung der Akkumulatoren muss eine Verbindung zu einer weiteren Energiequelle, insbesondere zu einem geeigneten Netzteil bzw. zu einem Ladegerät, hergestellt werden. Dazu sind im Stand der Technik sowohl Anordnungen mit einer galvanischen Verbindung zwischen Ladegerät und Akkumulator als auch ohne galvanische Verbindung zwischen Ladegerät und Akkumulator bekannt. Bei den bekannten Anordnungen, bei denen keine galvanische Verbindung zwischen der Fernbedienung und der Energiequelle besteht (d. h. bei galvanischer Trennung), erfolgt die Energieübertragung üblicherweise induktiv zwischen einer Ladestation bzw. Basisstation und der Fernbedienung. Die Ladestation bzw. die Basisstation sind dabei das Quellgerät und die Fernbedienung das Zielgerät.

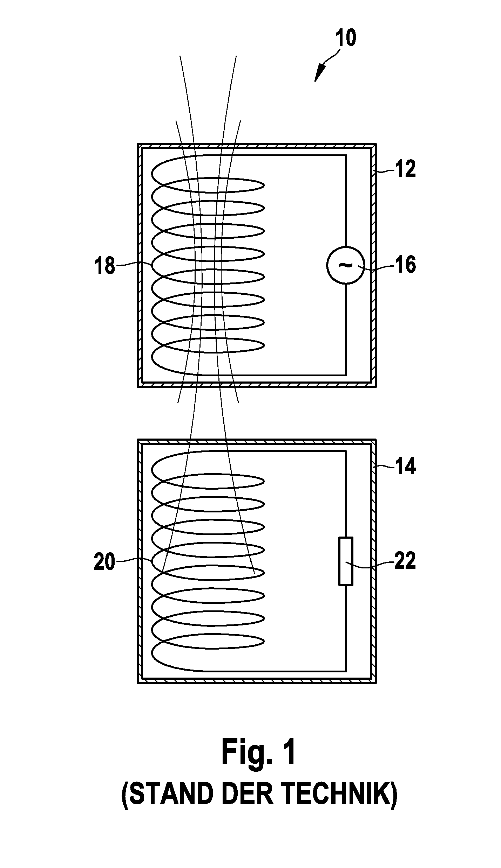

In Figur 1 ist eine bekannte Anordnung 10 zum induktiven Übertragen von Energie dargestellt. Die Anordnung 10 umfasst dabei ein Quellgerät 12 und ein Zielgerät 14. Das Quellgerät 12 umfasst eine Energiequelle 16, die als Wechselstromquelle ausgebildet ist und eine Wechselspannung erzeugt. Ferner umfasst das Quellgerät 12 eine quellgeräteseitige Spule 18, die als Primärspule 18 zur Energie- bzw. Datenübertragung zum Zielgerät 14 dient. Das Zielgerät 14 umfasst eine zielgeräteseitige Spule 20, die als Sekundärspule 20 dient und elektrisch mit einer als Lastwiderstand dargestellten Ladeschaltung 22 verbunden ist. Die Energiequelle 16 des Quellgerätes 12 ist elektrisch mit der quellgeräteseitigen Primärspule 18 verbunden, sodass die Energiequelle 16 einen Wechselstromfluss durch die Spule 18 hindurch bewirkt, wodurch die Spule 18 ein zeitlich verändertes Magnetfeld (Magnetwechselfeld) erzeugt. Die zielgeräteseitige Sekundärspule 20 befindet sich in dem von der Primärspule 18 erzeugten Magnetfeld, wenn sich das Zielgerät 14 in einer Lade- und/oder Datenübertragungsposition befindet. Durch das Magnetwechselfeld wird in der Sekundärspule 20 eine Spannung induziert, durch die ein Stromfluss durch die als Lastwiderstand dargestellte Ladeschaltung 22 möglich ist, sodass dieser Ladeschaltung 22 die von der Energiequelle 16 über die Spulen 18, 20 übertragene Energie zugeführt wird. Alternativ oder zusätzlich zur Ladeschaltung 22 kann eine Auswerteschaltung zum Ermitteln von über die Anordnung nach Figur 1 übertragenen Daten vorgesehen sein.

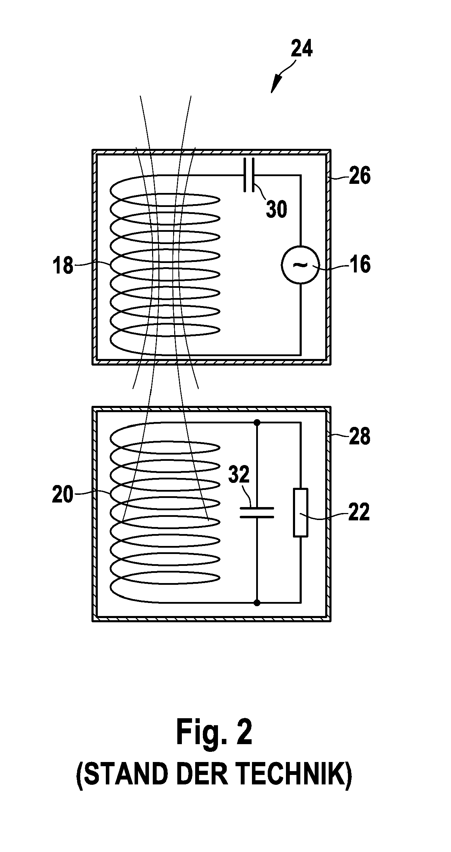

In Figur 2 ist eine Anordnung 24 zum Übertragen von Energie zwischen einem Quellgerät 26 und einem Zielgerät 28 ähnlich der Anordnung 10 nach Figur 1 dargestellt. Gleiche Elemente haben dieselben Bezugszeichen. Im Unterschied zu der Anordnung 10 nach Figur 1 enthält der Stromkreis des Quellgerätes 26 und der Stromkreis des Zielgerätes 28 jeweils einen Kondensator 30, 32. Durch die Anordnung des Kondensators 30 im Stromkreis des Quellgerätes 26 wird ein Serienschwingkreis und durch den Kondensator 32 im Sekundärstromkreis wird ein Parallelschwingkreis gebildet. Durch diese Schwingkreise erfolgt eine Resonanzkopplung zwischen Quellgerät 26 und Zielgerät 28, durch die ein relativ großer Wirkungsgrad bei der Energieübertragung vom Primärstromkreis zum Sekundärstromkreis bzw. vom Quellgerät 26 zum Zielgerät 28 erreicht wird. Bei der in Figur 2 gezeigten Anordnung 24 wird ein Magnetfeld von der Primärspule 18 erzeugt. Die Primärspule 18 und der Kondensator 30 bilden einen auf Resonanz abgestimmten Primärstromkreis. Das von der Primärspule 18 erzeugte Magnetfeld durchsetzt die Sekundärspule 20, die Bestandteil des Sekundärresonanzkreises ist. Jedoch ist es in der Praxis schwierig, die Resonanzfrequenzen des primärseitigen Resonanzkreises und des sekundärseitigen Resonanzkreises aufeinander abzustimmen, da sich die Resonanzbedingungen abhängig von dem Ladezustand der Akkumulatoren bzw. abhängig vom sich über den Ladezyklus verändernden Lastwiderstand 22 ändern.

Zur Abstimmung der Resonanzfrequenz sind verschiedene Maßnahmen sowohl primärseitig als auch sekundärseitig denkbar. Beispielsweise kann eine geeignete Frequenz der Energiequelle 16 gewählt werden, wobei die Frequenz voreingestellt, in einem vorgegebenen Frequenzbereich eingestellt, geregelt oder nachgeführt werden kann. Weiterhin können geeignete konstruktive, insbesondere mechanische und elektronische, Maßnahmen vorgesehen werden, um die Resonanzbedingungen über einen längeren Ladezyklus aufrecht zu erhalten. Insbesondere kann das Aufrechterhalten der Resonanzbedingung durch eine geeignete Bauteilauswahl erreicht oder zumindest unterstützt werden. Ferner kann ein Resonanzabgleich durch eine Veränderung der Kapazität mindestens eines der Kondensatoren 30, 32 oder der Induktivität mindestens einer der Spulen 18, 20 erreicht werden. Dies ist jedoch mit einem relativ hohen Aufwand verbunden. Insgesamt ist das Aufrechterhalten der Resonanzbedingungen im Primär-und/oder Sekundärstromkreis relativ aufwendig.

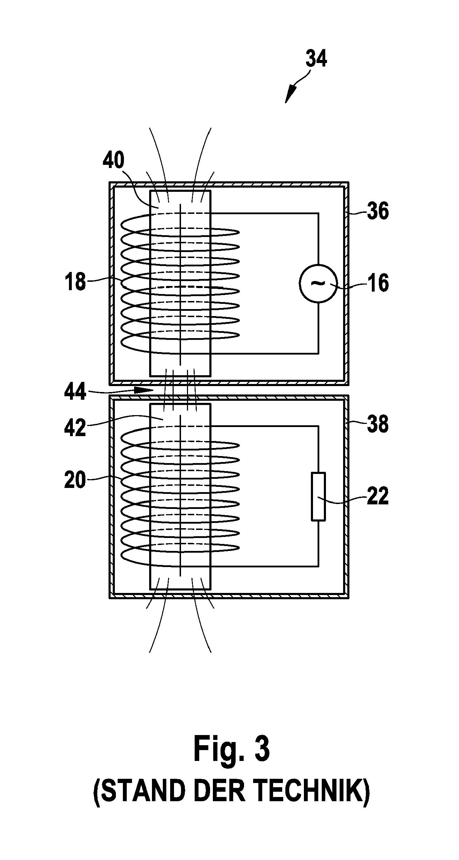

In Figur 3 ist eine Anordnung 34 zum Übertragen von Energie zwischen einem Quellgerät 36 und einem Zielgerät 38 ähnlich der Anordnung 10 nach Figur 1 dargestellt. Im Unterschied zu der Anordnung 10 nach Figur 1 ist die Primärspule 18 um ein erste Eisenkernsegment 40 und die Sekundärspule 20 um ein zweites Eisenkernsegment 42 herum angeordnet. Die Eisenkernsegmente 40, 42 weisen in einer Lade- und/oder Datenübertragungsposition einen Spalt 44 an ihren einander zugewandten Stirnseiten auf. Der Spalt 44 wird insbesondere durch die jeweils geschlossenen Gehäuse des Quellgerätes 36 und des Zielgerätes 38 und/oder durch einen zusätzlichen Luftspalt gebildet. Die aus einer der voneinander abgewandten Stirnseiten der Magnetkernsegmente 40, 42 austretenden Feldlinien treten in die gegenüberliegende abgewandte Stirnseite ein und schließen den magnetischen Kreis mit den Magnetkernsegmenten 40, 42 und mit dem Spalt 44.

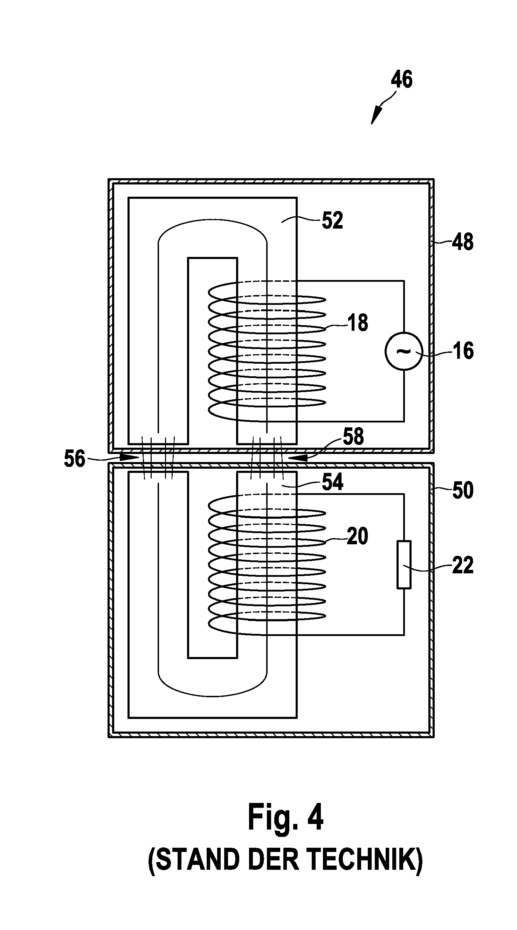

In Figur 4 ist eine Anordnung 46 ähnlich der Anordnung 34 nach Figur 3 gezeigt, wobei sowohl beim Quellgerät 48 als auch beim Zielgerät 50 Magnetkernsegmente 52, 54 eingesetzt werden, die u-förmig ausgebildet und in einer Daten- und/oder Energieübertragungsposition derart angeordnet sind, dass jeweils beide Stirnflächen der Magnetkernsegmente 52, 54 einander gegenüberliegen und derart in einem Abstand zueinander angeordnet sind, dass zwischen diesen Stirnseiten jeweils ein Spalt 56, 58 ähnlich dem Spalt 44 der Anordnung 34 vorgesehen ist.

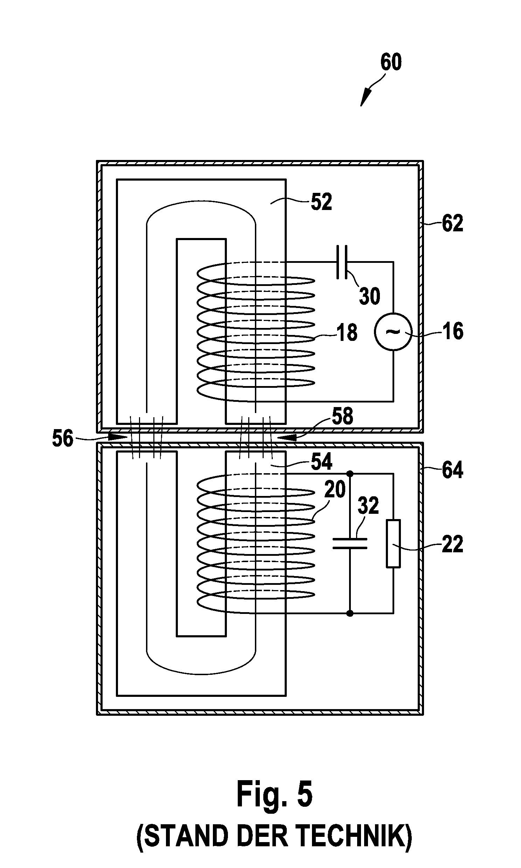

In Figur 5 ist eine Anordnung 60 ähnlich der Anordnung 46 nach Figur 4 dargestellt, wobei im Stromkreis des Quellgerätes 62 und im Stromkreis des Zielgerätes 64 jeweils ein Kondensator 30, 32 zur Bildung von Schwingkreisen in gleicher Weise, wie bereits im Zusammenhang mit Figur 2 beschrieben, vorgesehen sind.

Üblicherweise sind die Gehäuse der Quellgeräte und der Zielgeräte aus einem elektrisch isolierendem und einem elektromagnetische Felder nicht oder nur gering schwächendem Material ausgeführt. Durch die erforderlichen Mindestdicken der Gehäusewände, insbesondere zur elektrischen Isolation und mechanischen Festigkeit des Gehäuses des Quellgerätes und des Zielgerätes, weist der Spalt bzw. weisen die Spalte bei den gezeigten bekannten Ausführungen eine Mindestspaltbreite auf, die die Eigenschaften des magnetischen Kreises wesentlich beeinflusst. Die Spaltbreite ist maßgeblich für die magnetische Feldstärke in dem durch die Magnetkernsegmente gebildeten magnetischen Kreis der Anordnung nach den Figuren 1 bis 5.

Aus dem Dokument DE 38 10 702 C2 ist eine Anordnung bekannt, bei der eine Frequenznachführung einer Energiequelle durchgeführt wird. Dazu wird bei dieser Anordnung die Phasenbeziehung zwischen Strom und Spannung im Primärstromkreis ermittelt und auf einen voreingestellten Wert geregelt.

Aus dem Dokument DE 198 37 675 A1 ist eine Ladevorrichtung bekannt, bei der zum induktiven Übertragen von Ladeenergie ein Leistungsoszillator in einem primären Teil eines induktiven Kopplers vorgesehen ist. Im sekundären Teil ist eine Schaltvorrichtung zum alternierenden Aufnehmen von Leistung zum Laden des Akkumulators vorgesehen.

Aus dem Dokument DE 601 02 613 T2 ist eine Anordnung bekannt, bei der die Sendeleistung der von einer Transponderlesevorrichtung abgegebenen Energie eingestellt wird. Dabei ist ein Reihenschwingkreis im primärseitigen bzw. senderseitigen Stromkreis zum Bereitstellen der Sendeleistung vorgesehen. Es wird eine aktuelle Information über die magnetische Kopplung zwischen einem Transponder und der Lesevorrichtung erfasst. Der Resonanzkreis weist eine veränderbare Kapazität auf, durch die der Resonanzkreis abgestimmt werden kann.

Ausgehend von den im Stand der Technik bekannten Anordnungen liegt der Erfindung die Aufgabe zugrunde, eine Vorrichtung und ein Verfahren zur drahtlosen Energie- und/oder Datenübertragung zwischen einem Quellgerät und mindestens einem Zielgerät anzugeben, bei denen bei einem einfachen Aufbau eine gute Energie- bzw. Datenübertragung möglich ist.

Diese Aufgabe wird durch eine Vorrichtung mit den Merkmalen des Patentanspruchs 1 und durch ein Verfahren mit den Merkmalen des unabhängigen Verfahrensanspruchs gelöst. Vorteilhafte Weiterbildungen der Erfindung sind in den abhängigen Patentansprüchen angegeben.

Durch eine erfindungsgemäße Vorrichtung sowie durch ein erfindungsgemäßes Verfahren zur drahtlosen Energie- und/oder Datenübertragung zwischen einem Quellgerät und mindestens einem Zielgerät wird erreicht, dass die Resonanzfrequenz des Resonators und das Erfüllen der Resonanzbedingung nicht von veränderlichen Bedingungen des Primärstromkreises und des Sekundärstromkreises abhängig sein müssen. Insbesondere ist der Resonator unabhängig von der veränderlichen Last im Sekundärstromkreis. Durch den elektrisch vom Primärstromkreis und vom Sekundärstromkreis isolierten Resonator kann ferner eine gezielte effiziente Energieübertragung zwischen dem Primärstromkreis und dem Sekundärstromkreis erfolgen. Bei der Anordnung mehrerer jeweils vom Primärstromkreis und vom Sekundärstromkreis elektrisch isolierter Resonatoren mit voneinander verschiedener Resonanzfrequenz können nahezu beliebige gewünschte Signalformen übertragen werden, wie beispielsweise Rechtecksignale, die beispielsweise aus mehreren harmonischen Schwingungen zusammengesetzt sind. Jeder Resonator wird dabei vorzugsweise von einem Resonanzkreis gebildet, der insbesondere mindestens eine Induktivität und eine Kapazität umfasst.

Durch jeden der Resonanzkreise wird dann Energie von der Primärseite zur Sekundärseite übertragen, wodurch die übertragene Gesamtenergiemenge die Summe der direkt vom Primärkreis zum Sekundärkreis und der vom Primärkreis zu den Resonanzkreisen und von diesen zu dem Sekundärkreis übertragenen Energieanteile ist. Beispielsweise kann die übertragene Gesamtenergiemenge um ca. 15 % erhöht werden, wenn statt einem Resonator zwei Resonatoren vorgesehen werden. Der zweite Resonator hat vorzugsweise die doppelte Resonanzfrequenz des ersten Resonators. Für die Erfindung können jedoch anstatt eines elektromagnetischen Resonators auch andere Resonatoren, wie akustische, mechanische oder hydromechanische Resonatoren, eingesetzt werden. Ein Resonator im Sinne der Erfindung ist dabei jedes schwingfähige System, dessen Komponenten auf eine Eingangsfrequenz in der Art abgestimmt sind, dass der Resonator bei Anregung mit dieser Frequenz ausschwingt.

Bei einer Weiterbildung der Erfindung ist der Resonator als Resonanzkreis bzw. sind die Resonatoren als Resonanzkreise ausgebildet. Die Primärspule, die Sekundärspule und die Induktivität des isolierten Resonanzkreises / der isolierten Resonanzkreise sind dabei vorzugsweise in demselben magnetischen Kreis angeordnet. Dabei ist es vorteilhaft, wenn die Primärspule, die Sekundärspule und eine die Induktivität des isolierten Resonanzkreises bildende Spule um einen vom magnetischen Kreis umfassten Magnetkern herum angeordnet sind, wobei der magnetische Kreis vorzugsweise ein Magnetkern ohne Spalt aufweist.

Ferner ist es vorteilhaft, mindestens zwei Resonanzkreise vorzusehen, die jeweils vom Sekundärstromkreis und vom jeweils anderen Stromkreis elektrisch isoliert sind. Die Induktivitäten der mindestens zwei Resonanzkreise sind vorzugsweise jeweils als Spule ausgeführt, deren Wicklungen als bifilare Wicklungen bzw. bei mehr als zwei Resonanzkreisen als n-filare Wicklungen ausgeführt sind. Durch die bifilaren Wicklungen oder bei n-Resonanzkreisen durch die n-filaren Wicklungen haben die durch diese Wicklungen gebildeten Spulen vorzugsweise dieselbe Induktivität, sodass die Resonanzfrequenz allein durch die Wahl unterschiedlicher Kapazitäten eingestellt werden kann. Dies ist vorteilhaft, wenn die Resonanzkreise voneinander verschiedene Resonanzfrequenzen aufweisen, sodass die Energieübertragung zwischen Primärstromkreis und Sekundärstromkreis durch die Resonanzkreise mit den überlagerten Resonanzfrequenzen der Resonanzkreise bzw. der Resonatoren beeinflusst wird.

Es kann ferner vorteilhaft sein, wenn die Wicklung der Sekundärspule und die Wicklung einer die Induktivität des Resonanzkreises bildenden Spule und/oder die Wicklung der Primärspule und die Wicklung einer die Induktivität des Resonanzkreises bildende Spule als bifilare Wicklung ausgeführt sein können. Es sind mehrere Resonanzkreise vorgesehen, können die Wicklungen der Spulen der Resonanzkreise oder die Wicklungen eines Teils der Spulen des Resonanzkreises und die Primärwicklung bzw. die Sekundärwicklung als n-filare Wicklungen ausgeführt sein. Das Vorsehen von n-filaren Wicklungen vereinfacht die Fertigung der gesamten Vorrichtung. Insbesondere kann die Induktivität von den durch die n-filaren Wicklungen gebildeten Spulen durch Zusammenschaltung mehrerer Spulen einfach verändert, insbesondere verdoppelt werden.

Ferner ist es vorteilhaft, ein zu übertragendes Signal mit Hilfe einer Fourier-Transformation zu zerlegen. Für jede der harmonischen Schwingungen der Fourier-Transformierten eines durch Fourier-Transformation zerlegten zu übertragenden Signals ist ein Resonanzkreis vorgesehen, dessen Resonanzfrequenz mit der Frequenz der jeweiligen harmonischen Schwingung übereinstimmt. Dadurch können nahezu beliebige Signalformen aus den harmonischen Schwingungen zusammengesetzt werden, sodass beispielsweise sekundärseitig ein im Wesentlichen rechteckförmiger Signalverlauf erzeugt werden kann. Es wird darauf hingewiesen, dass auch der unabhängige Verfahrensanspruch mit Merkmalen einzelner abhängiger Vorrichtungsansprüche bzw. entsprechenden Verfahrensmerkmalen weitergebildet werden kann.

Weitere Merkmale und Vorteile der Erfindung ergeben sich aus der folgenden Beschreibung, welche in Verbindung mit den beigefügten Figuren die Erfindung anhand von Ausführungsbeispielen näher erläutert.

Es zeigen:
- Figur 6: eine Anordnung zum induktiven Übertragen von Energie gemäß einer ersten Ausführungsform der Erfindung;
- Figur 7: eine Anordnung zum induktiven Übertragen von Energie gemäß einer zweiten Ausführungsform der Erfindung;
- Figur 8: eine Anordnung zum induktiven Übertragen von Energie gemäß einer dritten Ausführungsform der Erfindung;
- Figur 9: eine Anordnung zum induktiven Übertragen von Energie gemäß einer vierten Ausführungsform der Erfindung;
- Figur 10: eine Anordnung zum induktiven Übertragen von Energie gemäß einer fünften Ausführungsform der Erfindung; und
- Figur 11: eine Anordnung zum induktiven Übertragen von Energie gemäß einer sechsten Ausführungsform der Erfindung.

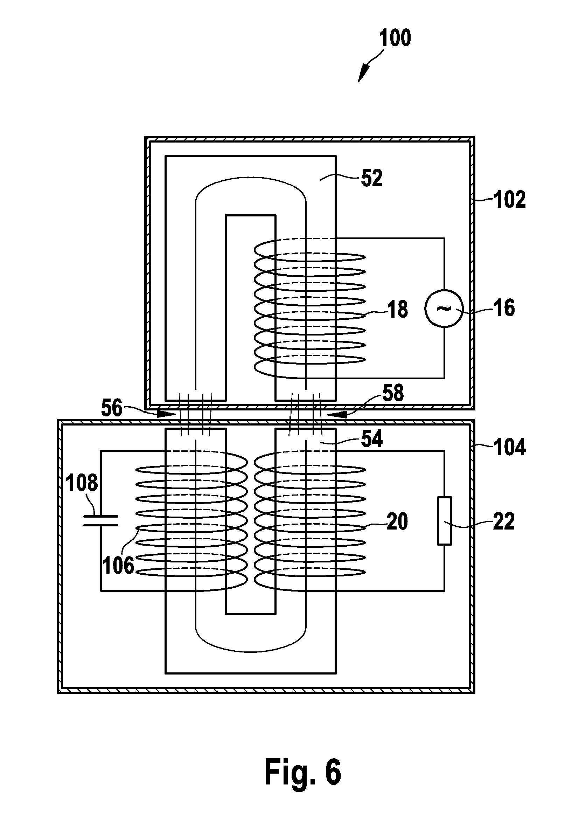

In Figur 6 ist eine Anordnung 100 zur drahtlosen Energie- und/oder Datenübertragung zwischen einem Quellgerät 102 und einem Zielgerät 104 gemäß einer ersten Ausführungsform der Erfindung dargestellt. Die Anordnung 100 hat einen ähnlichen Aufbau wie die bereits beschriebene bekannte Anordnung 46 nach Figur 4. Gleiche Elemente haben dieselben Bezugszeichen. Neben dem primärseitigen Stromkreis, der die Energiequelle 16 und die Spule 18 umfasst, weist die Anordnung 100 auch den sekundärseitigen Stromkreis mit der Sekundärspule 20 und mit der als Lastwiderstand dargestellten Ladeschaltung 22 auf. Der Magnet- bzw. Eisenkern besteht aus einem ersten primärseitigen u-förmigen Magnetkernsegment 52 um das die Wicklungen der Primärspule 18 herum angeordnet sind und ein zweites sekundärseitiges u-förmiges Magnetkernsegment 54. Zwischen den Magnetkernsegmenten 52, 54 sind in einer Lade- und/oder Datenübertragungsposition des Quellgerätes 102 und des Zielgerätes 104 die Spalte 56, 58 vorhanden. Ferner weist die Anordnung 100 eine Spule 106 auf, deren Wicklungen um das zweite Magnetkernsegment 54 herum angeordnet sind und die elektrisch mit einem Kondensator 108 verbunden ist. Die Spule 106 und der Kondensator 108 bilden einen Schwingkreis, der eine von der Induktivität der Spule 106 und von der Kapazität des Kondensators 108 abhängige Resonanzfrequenz hat. Dieser Schwingkreis wird auch als Resonanzschwingkreis bezeichnet und ist ein Resonator im Sinne der Erfindung. Der Resonator ist somit bei der Anordnung 100 nach Figur 6 sekundärseitig, d. h. im Zielgerät 104, angeordnet.

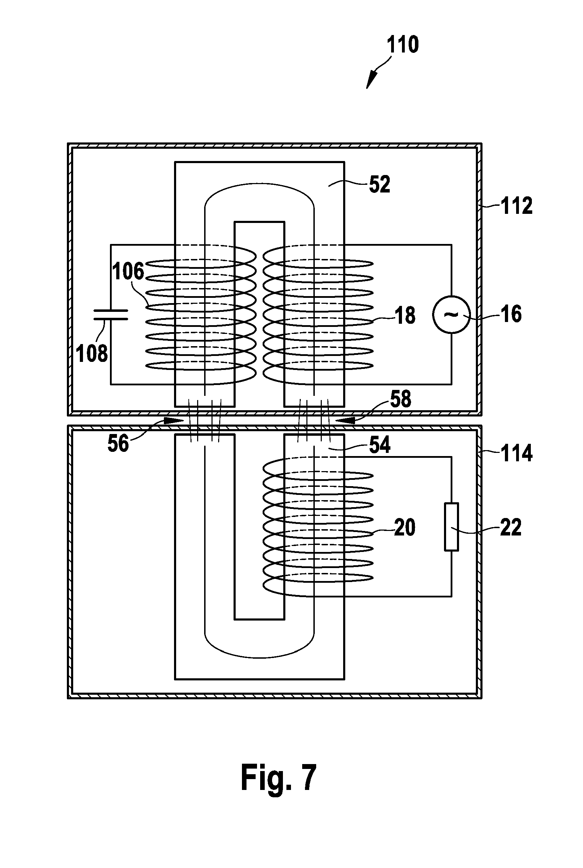

In Figur 7 ist eine Anordnung 110 zur drahtlosen Energie- und/oder Datenübertragung zwischen einem Quellgerät 112 und einem Zielgerät 114 gemäß einer zweiten Ausführungsform der Erfindung dargestellt. Die Anordnung 110 hat einen ähnlichen Aufbau wie die Anordnung 100 nach Figur 6. Im Unterschied zu der Anordnung 100 nach Figur 6 ist der Resonator bestehend aus der Spule 106 und dem Kondensator 108 räumlich im Quellgerät 112 angeordnet, wobei die Wicklungen der Spule 106 um das erste Magnetkernsegment 52 des Magnetkerns herum angeordnet sind.

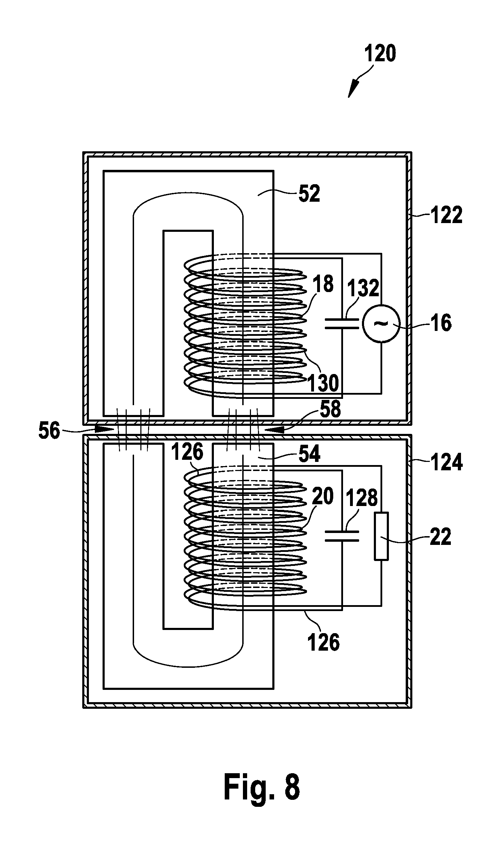

In Figur 8 ist eine Anordnung 120 zur drahtlosen Energie- und/oder Datenübertragung zwischen einem Quellgerät 122 und einem Zielgerät 124 gemäß einer dritten Ausführungsform der Erfindung dargestellt, bei der sowohl ein primärseitiger Resonator als auch ein sekundärseitiger Resonator vorgesehen sind. Eine Spule 126 und ein Kondensator 128 sind elektrisch miteinander verbunden und bilden den sekundärseitigen Resonator. Eine Spule 130 und ein Kondensator 132 sind elektrisch miteinander zu einem Stromkreis verbunden und bilden den primärseitigen Resonator. Die Wicklungen der Spule 130 und der quellgeräteseitigen Primärspule 18 sind als bifilare Wicklungen ausgeführt. In gleicher Weise sind die Wicklungen der Spule 126 und der zielgeräteseitigen Sekundärspule 20 als bifilare Wicklung ausgeführt.

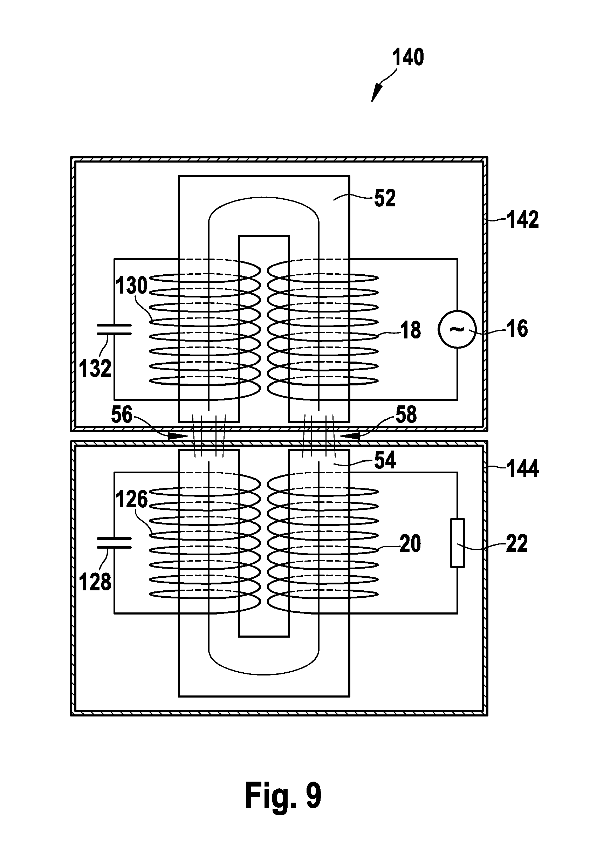

In Figur 9 ist eine Anordnung 140 ähnlich der Anordnung 120 nach Figur 8 zur drahtlosen Energie- und/oder Datenübertragung zwischen einem Quellgerät 142 und mindestens einem Zielgerät 144 gemäß einer vierten Ausführungsform der Erfindung dargestellt, bei der die Wicklungen der quellgeräteseitigen Primärspule 18 und der Spule 130 des primärseitigen Resonators als separate Wicklungen ausgeführt sind. In gleicher Weise sind die Wicklungen der zielgeräteseitigen Sekundärspule 20 und die Spule 126 des sekundärseitigen Resonators als separate Wicklungen ausgeführt.

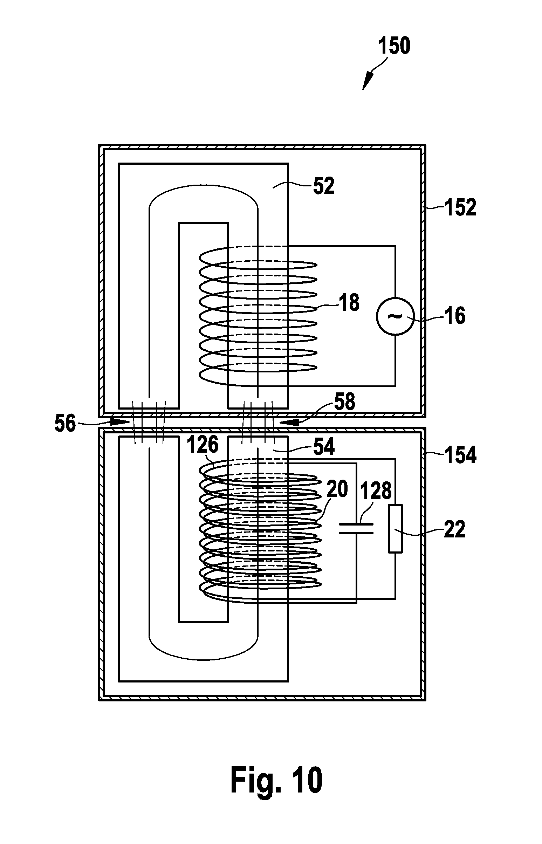

In Figur 10 ist eine Anordnung 150 zur drahtlosen Energie- und/oder Datenübertragung zwischen einem Quellgerät 152 und einem Zielgerät 154 gemäß einer fünften Ausführungsform der Erfindung dargestellt, die einen zielgeräteseitigen Resonator aufweist. Die Wicklungen der Spule des zielgeräteseitigen Resonators und die zielgeräteseitige Sekundärspule sind bei dieser Ausführungsform als bifilare Wicklungen ausgeführt. Ein primärseitiger Resonator ist bei dieser Anordnung nicht vorgesehen.

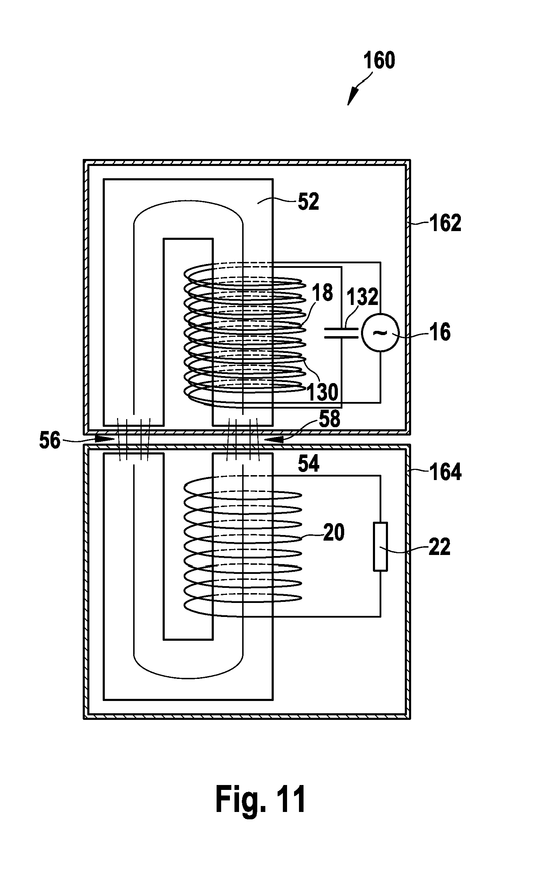

In Figur 11 ist eine Anordnung 160 zur drahtlosen Energie- und/oder Datenübertragung zwischen einem Quellgerät 162 und einem Zielgerät 164 gemäß einer sechsten Ausführungsform der Erfindung dargestellt. Die Anordnung 160 weist einen primärseitigen Resonator auf. Die Wicklungen der Spule 130 des Resonators sind mit den Wicklungen der quellgeräteseitigen Primärspule 18 als Bifilarwicklung ausgeführt.

Die beschriebenen Ausführungsformen der Erfindung zeigen bei den Ausführungen der Wicklung der Spulen der Resonatoren entweder die Verwendung von Bifilarwicklungen mit der quellgeräteseitigen Primärspule 18 bzw. mit den Wicklungen der zielgeräteseitigen Sekundärspule 20 oder die Ausführung von separaten Wicklungen der quellgeräteseitigen Primärspule und der Spule des Resonators sowie eine separate Anordnung der zielgeräteseitigen Sekundärspule 20 und der Spule des Resonators bzw. der Spulen der Resonatoren. Jedoch sind in gleicher Weise Anordnungen möglich, bei denen beispielsweise die Wicklungen eines primärseitigen Resonators und die Wicklungen der quellgeräteseitigen Primärspule 18 als separate Wicklungen ausgeführt sind und die Wicklungen einer Spule eines sekundärseitigen Resonators und Wicklungen der zielgeräteseitigen Sekundärspule 20 als separate Wicklungen ausgeführt sind. In gleicher Weise ist es möglich, die Wicklungen der Spule eines primärseitigen Resonators und die quellgeräteseitige Primärspule 18 als separate Wicklungen auszuführen und die Wicklungen der Spule eines sekundärseitigen Resonators und die zielgeräteseitige Sekundärspule 20 als bifilare Wicklung auszuführen. Zur vereinfachten Darstellung ist bei den Ausführungsbeispielen sowohl primärseitig als auch sekundärseitig jeweils nur ein Resonator dargestellt. Jedoch ist es sinnvoll, bei bestimmten Ausführungsformen der Erfindung mehrere primärseitige und/oder mehrere sekundärseitige Resonatoren vorzusehen, deren Wicklungen vorzugsweise als n-filare Wicklungen mit der Primärspule 18 bzw. Sekundärspule 20 und/oder als separate Wicklungen zu den Wicklungen der Primärspule 18 und der Sekundärspule 20 ausgeführt sind.

Werden mehrere Resonatoren vorgesehen, weisen diese vorzugsweise unterschiedliche Resonanzfrequenzen auf. Dabei ist es vorteilhaft, die Spulen aller sekundärseitigen Resonatoren als auch die Wicklungen der Spulen aller primärseitigen Resonatoren jeweils als n-filare Wicklungen auszubilden, sodass diese jeweils im Wesentlichen dieselbe Induktivität aufweisen. Durch die n-filaren Wicklungen kann eine im Wesentlichen übereinstimmende Induktivität der so gewickelten Spulen auf einfache Art und Weise im Produktionsprozess ermöglicht werden. Durch Zusammenschaltung mehrerer Spulen kann die Induktivität exakt vervielfacht werden. Zum Festlegen der gewünschten Resonanzfrequenz werden dann Kondensatoren mit einer geeigneten Kapazität vorgesehen, die jeweils elektrisch mit einer Spule oder mit mehreren zusammengeschalteten Spulen verbunden werden und somit einen Schwingkreis bzw. Resonanzkreis (Resonator) bilden. Durch das Vorsehen von elektrisch mit dem Primärkreis und Sekundärstromkreis nicht verbundenen, d. h. elektrisch isolierten, Resonatoren wird ein für die Energie- und Datenübertragung hoher Wirkungsgrad erreicht. Bauteiltoleranzen der im Primärstromkreis und Sekundärstromkreis enthaltenen Bauelemente sowie eine Änderung der Eigenschaften des durch die Ladeschaltung 22 gebildeten Lastwiderstandes führen dabei nicht zu einer Änderung der Eigenschaften des Resonators, insbesondere nicht zu einer Änderung der Resonanzfrequenz. Eine aufwendige Justage oder ein Nachführen der Resonanzfrequenz ist somit durch die Erfindung nicht erforderlich.

Wie die Ausführungsbeispiele zeigen, ist es vorteilhaft, den mindestens einen Resonator im selben magnetischen Kreis wie die Primärspule und die Sekundärspule 20 anzuordnen. Beim Einsatz mehrerer Resonatoren kann eine resonate Übertragung von hochfrequenten, nicht sinusförmigen Signalen erfolgen, die vorzugsweise aus mehreren sinusförmigen harmonischen Schwingungen zusammengesetzt sind. Dadurch können insbesondere im Wesentlichen rechteckförmige Signale auf einfache Art und Weise übertragen werden. Die erfindungsgemäßen Anordnungen sind beispielhaft mit zwei u-förmigen Magnetkernsegmenten 52, 54 gezeigt. Es sind jedoch auch andere Kernformen der Erfindung in gleicher Weise einsetzbar. Insbesondere kann auch nur ein primärseitiger Magnetkern vorgesehen sein, der konstruktiv so ausgebildet ist, dass er mechanisch aus dem Quellgerät hervorsteht. Im Gehäuse des Zielgerätes ist dann vorzugsweise eine Ausnehmung vorgesehen, in die der vorstehende Magnetkern in einer Ladeposition und/oder in einer Datenübertragungsposition hineinragt. Um die Ausnehmung herum ist die Sekundärspule 20 angeordnet, sodass diese um den Magnetkern herum angeordnet ist, wenn sich das Quellgerät und das Zielgerät in einer Datenübertragungsposition bzw. Energieübertragungsposition befinden. Alternativ oder zusätzlich kann das Zielgerät einen vorstehenden Kernbereich aufweisen, der in eine Ausnehmung des Quellgerätes ragt, wenn sich Quellgerät und Zielgerät in einer Datenübertragungs- bzw. Energieübertragungsposition befinden. Um die Ausnehmung des Quellgerätes herum ist dann die Primärspule angeordnet. Vorzugsweise sind das Gehäuse des Quellgerätes bzw. Zielgerätes um den vorstehenden Magnetkern und entlang der Ausnehmung geschlossen ausgebildet, sodass zumindest das Zielgerät ein umlaufend geschlossenes Gehäuse aufweist.

Die Energieübertragung zwischen der quellgeräteseitigen Primärseite und der zielgeräteseitigen Sekundärseite ist im Wesentlichen von der Intensität des von der Primärspule erzeugten Magnetfeldes bzw. des magnetischen Flusses im magnetischen Kreis und der Frequenz der von der Energiequelle 16 erzeugten Wechselspannung abhängig. Durch die Resonanzkreise kann insbesondere eine Resonanzüberhöhung von Strom und/oder Spannung erfolgen. Eine stabförmige Ausbildung des Magnetkerns, wie sie in Verbindung mit Figur 2 gezeigt ist, kann aufgrund der relativ freien Ausbreitungsmöglichkeiten der Feldlinien des Magnetfeldes im Außenbereich zu EMV-Problemen führen. Ferner kann die Feldstärke bzw. der magnetische Fluss nur mit relativ großem Aufwand erhöht werden. Die Menge der zur Sekundärseite übertragenen Energie hängt von der magnetischen Feldstärke und der Frequenz, mit der sich die magnetische Feldstärke ändert, ab. Durch die Änderung der Feldstärke des durch die Primärspule erzeugten Magnetfeldes wird in der Sekundärspule 20 eine Spannung induziert.

Erfindungsgemäß wird ein primärseitiger Stromkreis mit einer primärseitigen Spule, ein sekundärseitiger Stromkreis mit einer sekundärseitigen Spule und einem zusätzlich im magnetischen Kreis bzw. im Bereich des von der Primärspule erzeugten Magnetfeldes angeordneten Resonators genutzt, um eine drahtlose Energieübertragung bzw. Datenübertragung zwischen der Primärseite und der Sekundärseite zu ermöglichen.

Durch die Erfindung müssen weder primärseitig noch sekundärseitig Maßnahmen getroffen werden, um die Resonanzbedingungen zu erfüllen. Vielmehr kann insbesondere unabhängig von der Resonanzbedingung eine Kompensation der Blindleistung primär- bzw. sekundärseitig erfolgen.

Die Anordnung der Resonatoren primär- und/oder sekundärseitig ist für die Funktion von nachrangiger Bedeutung. Vielmehr kann hierbei auf konstruktive Erfordernisse, insbesondere Baugrößen des Ziel- und/oder Quellgerätes Rücksicht genommen werden. Es ist vorteilhaft, wenn die Energiequelle 16 eine Wechselspannung mit einer Frequenz im Bereich von 20 kHz bis 5 MHz hat, vorzugsweise im Bereich 60 kHz bis 500 kHz.

## Patentansprüche

1. Vorrichtung zur drahtlosen Energie- und/oder Datenübertragung zwischen einem Quellgerät und mindestens einem Zielgerät,
mit mindestens einer quellgeräteseitigen Primärspule (18) mindestens eines Primärstromkreises,
mit mindestens einer zielgeräteseitigen Sekundärspule (20) mindestens eines Sekundärstromkreises,
und mit mindestens einem Resonator.

2. Vorrichtung nach Anspruch 1, **dadurch gekennzeichnet, dass** der Resonator einen Resonanzkreis aufweist, der vom Primärstromkreis und vom Sekundärstromkreis elektrisch isoliert ist

3. Vorrichtung nach Anspruch 1 oder 2, **dadurch gekennzeichnet, dass** der Resonator eine von der Frequenz einer im Primärstromkreis angeordneten Energiequelle verschiedene Resonanzfrequenz hat, vorzugsweise beträgt die Resonanzfrequenz das Doppelte oder das 0,5-fache der Frequenz der Energiequelle.

4. Vorrichtung nach einem der vorhergehenden Ansprüche 2 oder 3, **dadurch gekennzeichnet, dass** die Primärspule, die Sekundärspule und eine Induktivität eines Resonanzkreises des Resonators in demselben magnetischen Kreis angeordnet sind, vorzugsweise sind die Primärspule (18), die Sekundärspule (20) und eine die Induktivität des Resonanzkreises bildende Spule um einen den magnetischen Kreis bildenden Magnetkern angeordnet.

5. Vorrichtung nach einem der vorhergehenden Ansprüche, **dadurch gekennzeichnet, dass** mindestens zwei Resonatoren vorgesehen sind, die jeweils vom Primärstromkreis und vom Sekundärstromkreis und vom jeweils anderen Resonator elektrisch isoliert sind, wobei die Resonatoren vorzugsweise jeweils einen Resonanzkreis aufweisen und die Induktivitäten der mindestens zwei Resonanzkreise vorzugsweise jeweils als Spule ausgeführt sind, deren Wicklungen als Bifilarwicklung ausgeführt sind.

6. Vorrichtung nach Anspruch 5, **dadurch gekennzeichnet, dass** die mindestens zwei Resonatoren voneinander verschiedene Resonanzfrequenzen aufweisen.

7. Vorrichtung nach Anspruch 5 oder 6, **dadurch gekennzeichnet, dass** die mindestens zwei Resonanzkreise Spulen mit derselben Induktivität aufweisen, wobei die Wicklungen der Spulen vorzugsweise als n-filare Wicklungen ausgeführt sind.

8. Vorrichtung nach Anspruch 7, **dadurch gekennzeichnet, dass** die mindestens zwei Resonanzkreise voneinander verschiedene Kapazitäten aufweisen.

9. Vorrichtung nach einem der vorhergehenden Ansprüche 2 bis 8, **dadurch gekennzeichnet, dass** die Wicklung der Sekundärspule (20) und die Wicklung einer die Induktivität des Resonanzkreises bildende Spule als Bifilarwicklung ausgeführt sind.

10. Vorrichtung nach einem der vorhergehenden Ansprüche, **dadurch gekennzeichnet, dass** für jede der harmonischen Schwingungen der Fourier-Transformierten eines durch Fourier-Transformation zerlegten zu übertragenden Signals ein Resonator vorgesehen ist, dessen Resonanzfrequenz mit der Frequenz der jeweiligen harmonischen Schwingung übereinstimmt.

11. Vorrichtung nach einem der vorhergehenden Ansprüche, **dadurch gekennzeichnet, dass** eine im Primärstromkreis angeordnete Energiequelle eine rechteckförmige Ausgangsspannung erzeugt.

12. Verfahren zur drahtlosen Energie- und/oder Datenübertragung zwischen einem Quellgerät und mindestens einem Zielgerät,
bei dem durch mindestens eine quellgeräteseitige Primärspule (18) mindestens eines Primärstromkreises in mindestens einer zielgeräteseitigen Sekundärspule (20) mindestens eines Sekundärstromkreises eine Spannung induziert und mindestens ein Resonator angeregt wird.

13. Verfahren nach Anspruch 12, **dadurch gekennzeichnet, dass** der Resonator durch einen Resonanzkreis mit mindestens einer Spule und mit mindestens einer Kapazität gebildet wird, wobei der Resonanzkreis vom Primärstromkreis und vom Sekundärstromkreis elektrisch isoliert angeordnet wird.

14. Verfahren nach Anspruch 13, **dadurch gekennzeichnet, dass** dem Resonanzkreis durch die induzierte Spannung Energie zugeführt wird durch die der Resonanzkreis angeregt wird, und
dass der angeregte Resonanzkreis ein mit der Resonanzfrequenz des Resonanzkreises wechselndes Magnetfeld erzeugt, durch das eine Spannung in der Sekundärspule (20) induziert wird.
